# EUROPÄISCHE PATENTSCHRIFT

(11) **EP 0 877 696 B1**
(45) Veröffentlichungstag und Bekanntmachung des Hinweises auf die Patenterteilung: **25.08.1999**
(21) Anmeldenummer: 96946161.5
(22) Anmeldetag: 25.10.1996
(51) Int. Cl.: B62B 3/18

(54) **VON HAND BEWEGBARER TRANSPORTWAGEN**
MANUALLY DRIVEN TROLLEY
CHARIOT TRANSPORTEUR A COMMANDE MANUELLE

(30) Priorität: 15.01.1996 DE 29600565 U
(43) Veröffentlichungstag der Anmeldung: 18.11.1998
(73) Patentinhaber: WANZL METALLWARENFABRIK GMBH, D-89336 Leipheim (DE)
(72) Erfinder: HEINISCH, Klaus, D-86513 Ursberg (DE)
(86) Internationale Anmeldenummer: DE9602057
(87) Internationale Veröffentlichungsnummer: WO9726169

(56) Entgegenhaltungen:
- DE-A- 4 417 418
- US-A- 3 245 498
- US-A- 4 116 456

## Beschreibung

Die Erfindung betrifft einen von Hand bewegbaren Transportwagen, mit einer unteren Ladefläche und mit nach oben gerichteten Holmen, die eine Schiebeeinrichtung tragen, mit einem unterhalb der Schiebeeinrichtung ortsfest angeordneten unteren Korb, mit einem höher als der untere Korb angeordneten oberen Korb, der nach vorne versetzt und um eine quer zur Schieberichtung des Transportwagens sich erstreckende horizontale Achse nach oben so verschwenkbar ist, daß er sich über dem unteren Korb befindet, um mit diesem ein gemeinsames Behältnis zu bilden.

In der deutschen Gebrauchsmusterschrift G 84 02 435.6 wird ein derartiger Transportwagen beschrieben. Beim unteren Korb dieses Transportwagens ist die vordere Wand nach oben verlängert und bildet gleichzeitig die Rückwand des oberen Korbes. Zwischen der Wand und den Holmen sind Zwischenräume gebildet, die von den Seitenwänden des oberen Korbes dann durchmessen werden, wenn der obere Korb nach oben geschwenkt wird, um mit dem unteren Korb ein gemeinsames Behältnis zu bilden. Diese Art der Konstruktion ist deshalb so gewählt, damit bei der Beladung der unteren Ladefläche mit großen Gegenständen der obere Korb aus einer die untere Ladefläche teilweise überdeckenden Lage in eine die untere Ladefläche freigebenden Lage verschwenkt werden kann. Da jedoch der obere Korb in nach oben geschwenkter Position mit dem unteren Korb ein gemeinsames Behältnis bildet, ist es trotz Beladung der unteren Ladefläche möglich, auch kleinere Gegenstände im Behältnis zu transportieren. Beim Einsatz solcher Transportwagen in Selbstbedienungsgeschäften, z.B. in Baumärkten oder in sogenannten Gartencentern hat es sich als nachteilig erwiesen, daß der obere Korb relativ klein ist und daß dann, wenn jemand eine größere Menge von kleinen Artikeln einkaufen will, diese in beiden Körben nicht mehr Platz finden und deshalb teilweise auf der unteren Ladefläche abgestellt werden müssen, auf der sie mangels einer Umrandung der Ladefläche nicht so sicher transportiert werden können, wie in einem Korb. Daß der obere Korb beim Stand der Technik relativ klein geraten ist, rührt von der Forderung her, daß derartige Transportwagen immer platzsparend gestapelt werden können, ganz gleich, in welcher Lage sich der obere Korb der zu stapelnden Transportwagen befindet.

Ausgehend von diesem Stand der Technik ist es Aufgabe der Erfindung, einen gattungsgemäßen Transportwagen so weiterzuentwickeln, daß der obere Korb größer als bisher bekannt gestaltet werden kann und daß in bevorzugter Weise auch der Rauminhalt des gemeinsamen, von unterem und oberen Korb gebildeten Behältnisses eine Vergrößerung erfährt.

Die Lösung der Aufgabe besteht darin, daß der obere Korb mit einer um eine horizontale Achse ins Korbinnere verschwenkbaren Rückwand ausgestattet ist, die beim Hochschwenken des oberen Korbes durch Anstoßen an den unteren Korb nach oben geschwenkt wird.

Durch das an sich bekannte Ausstatten des oberen Korbes mit einer in das Korbinnere verschwenkbaren Rückwand ist es möglich, den oberen Korb nach vorne zu verlängern, ihn also zu vergrößern, denn beim platzsparenden Ineinanderschieben mehrerer Transportwagen lassen sich auch die oberen Körbe platzsparend dann ineinanderschieben, wenn sie sich in horizontaler Lage befinden. Nehmen sie hingegen eine nach oben geschwenkte Lage ein, werden sie nebeneinander plaziert. Neben einer Vergrößerung des Rauminhaltes des oberen Korbes wird in vorteilhafter Weise auch eine Vergrößerung des gemeinsamen Behältnisses erzielt, denn die schwenkbare Rückwand des oberen Korbes ist in dessen nach oben geschwenkter Lage zumindest teilweise über der hinteren Wand des unteren Korbes angeordnet. Die hintere Wand des unteren Korbes und die schwenkbare Wand des oberen Korbes bilden wiederum eine gemeinsame größere Wand, so daß das nunmehr gemeinsame größere Behältnis durch den Boden, durch die drei Seitenwände und durch die hintere Wand des unteren Behältnisses sowie durch die schwenkbare Wand, durch einen Teil der Seitenwände und durch einen Abschnitt des Bodens des oberen Korbes gebildet ist. Beim Nachuntenschwenken des oberen Korbes fällt die schwenkbare Wand des oberen Korbes wieder nach unten, um die Rückwand des oberen Korbes zu bilden.

Die Erfindung wird anhand eines Ausführungsbeispieles näher erläutert. Es zeigt
Fig. 1 einen Transportwagen, dessen oberer Korb sich in horizontaler Lage befindet;
Fig. 2 den Transportwagen in Seitenansicht mit nach oben geschwenktem oberen Korb sowie
Fig. 3 den gleichen Transportwagen in räumlicher Darstellung.

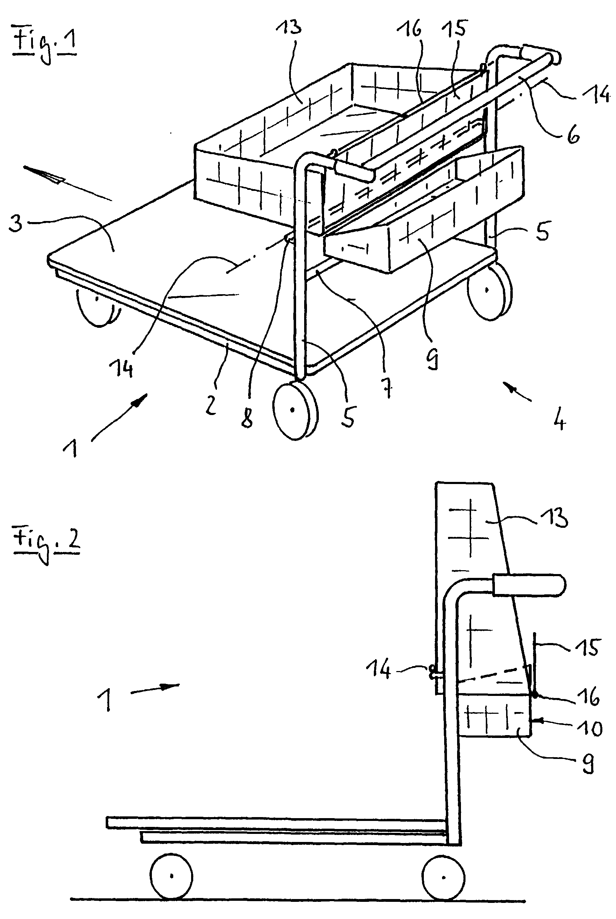

Der in Fig. 1 dargestellte Transportwagen 1 ist in bekannter Weise so gestaltet, daß er sich mit gleichen Transportwagen 1 platzsparend ineinanderschieben läßt. Er weist ein Fahrgestell 2 auf, das eine untere Ladefläche 3 trägt. Am hinteren Ende 4 des Transportwagens 1 streben zu beiden Seiten Holme 5 nach oben, die in bekannter Weise eine Schiebeeinrichtung 6, beispielsweise in Form eines Handgriffes tragen. Unterhalb der Schiebeeinrichtung 6 ist ein unterer Korb 9 an einer die Holme 5 verbindenden Querstrebe 7 ortsfest angeordnet. Oberhalb des unteren Korbes 9 und etwas nach vorne versetzt befindet sich ein oberer Korb 13, der einen Teil der Ladefläche 3 in einem Abstand zu dieser überdeckt. Der in Schieberichtung (Pfeil) sich verjüngende, also konische obere Korb 13 ist auf einer weiteren Querstrebe 8 um eine quer zur Schieberichtung des Transportwagens 1 sich erstreckenden horizontalen Achse 14 so verschwenkbar gelagert, daß er aus einer horizontalen Lage um etwa 90° nach oben in eine vertikale Lage verschwenkbar ist. Der Schwenkbereich des oberen Korbes 13 wird durch nicht näher dargestellte, am oberen Korb 13 und am Transportwagen 1 befindliche Anschläge bestimmt. Die Rückwand 15 des oberen Korbes 13 ist in an sich bekannter Weise bewegbar so angeordnet, daß sie sich um eine horizontale Achse 16 in das Korbinnere verschwenken läßt. Dadurch ist es möglich, beim platzsparenden Stapeln mehrerer Transportwagen 1 horizontal angeordnete obere Körbe 13 ineinander zu schieben, während die unteren Körbe 9 aufgrund ihrer geringen horizontal gemessenen Tiefe nebeneinander angeordnet sind. In der gezeichneten Lage bilden der untere und der obere Korb 9, 13 zwei eigenständige, voneinander getrennte Behältnisse.

In der Seitenansicht zeigt Fig. 2 einen Transportwagen 1 mit nach oben geschwenktem oberen Korb 13. Der obere Korb 13 ist quer zur Schieberichtung des Transportwagens 1 gemessen breiter ausgeführt als der untere Korb 9. Größe und Anordnung des unteren und des oberen Korbes 9, 13 sind dabei so gewählt, daß beim Nachobenschwenken des oberen Korbes 13 dessen Rückwand 15 an den unteren Korb 9 anstößt und von diesem um die horizontale Achse 16 nach oben geschwenkt wird, wobei sie, von nicht dargestellten Anschlägen gehalten, hinter der hinteren Wand 10 des unteren Korbes 9 parallel zur Wand 10 angeordnet ist und diese überragt. Schwenkt man den oberen Korb 13 zurück in die horizontale Lage, nimmt die Rückwand 15 des oberen Korbes 13 wieder eine annähernd vertikale Lage ein, so wie dies in Fig. 1 ersichtlich ist.

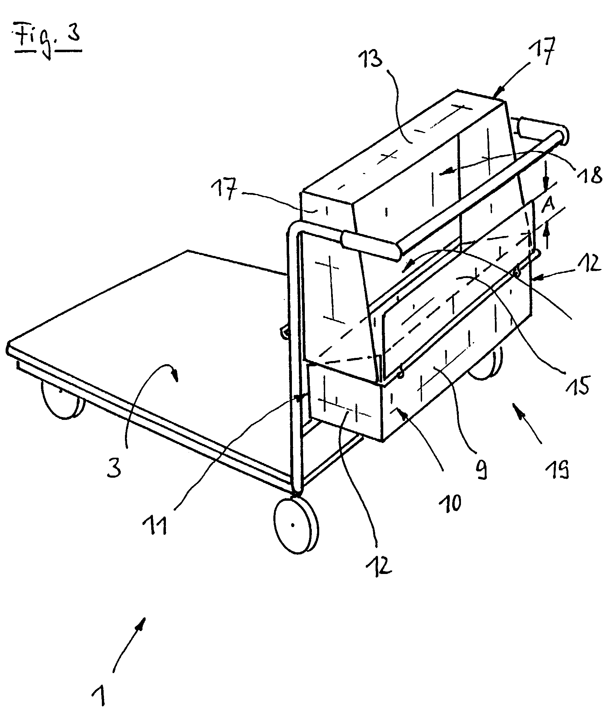

Ergänzend zeigt Fig. 3 den in Fig. 2 dargestellten Transportwagen 1 in räumlicher Darstellung. Die Seitenwände 17 des oberen Korbes 13 überdecken von außen her teilweise die Seitenwände 12 des unteren Korbes 9. Der Boden 18 des oberen Korbes 13 ist knapp über der vorderen Wand 11 des unteren Korbes 9 angeordnet. Die Rückwand 15 des oberen Korbes 13 schmiegt sich von hinten an die hintere Wand 10 des unteren Korbes 9 an und ragt, von Anschlägen gehalten, um das Maß A über die hintere Wand 10 hinaus. Dadurch wird ein gemeinsames, von oben her zugängliches Behältnis 19 geschaffen, vgl. bogenförmiger Pfeil, dessen Rauminhalt größer ist, als der Rauminhalt des unteren Korbes 9. In dieser Lage ist der über der Ladefläche 3 befindliche Bereich nach oben hin frei. Die Ladefläche 3 kann mit großen und relativ hohen Gegenständen beladen werden, während das gemeinsame Behältnis 19 mit kleinen Gegenständen auffüllbar ist.

Die in den Beispielen gezeigten Holme 5 sind so angeordnet, daß es natürlich am zweckmäßigsten ist, die Rückwand 15 des oberen Korbes 13 vom unteren Korb 9 anheben zu lassen. Da jedoch auch andere Formen für die Holme 5 möglich sind, kann es durchaus angebracht sein, wenigstens einen außerhalb des Korbes 9 befindlichen Anschlag vorzusehen, der z.B. die Holme 5 verbindet und an den die Rückwand 15 des oberen Korbes 13 bei dessen Hochschwenken anstößt, um ebenfalls im Sinne der Erfindung nach oben geschwenkt zu werden.

## Patentansprüche

1. Von Hand bewegbarer Transportwagen (1), mit einer unteren Ladefläche (3) und mit nach oben gerichteten Holmen (5), die eine Schiebeeinrichtung (6) tragen, mit einem unterhalb der Schiebeeinrichtung (6) ortsfest angeordneten unteren Korb (9), mit einem höher als der untere Korb (9) angeordneten oberen Korb (13), der nach vorne versetzt und um eine quer zur Schieberichtung (6) des Transportwagens (1) sich erstreckende horizontale Achse (14) nach oben so verschwenkbar ist, daß er sich über dem unteren Korb (9) befindet, um mit diesem ein gemeinsames Behältnis zu bilden, dadurch **gekennzeichnet,** daß der obere Korb (13) mit einer um eine horizontale Achse (16) ins Korbinnere verschwenkbaren Rückwand (15) ausgestattet ist, die beim Hochschwenken des oberen Korbes (13) durch Anstoßen an den unteren Korb (9) oder an wenigstens einen außerhalb des Korbes (9) befindlichen Anschlag nach oben geschwenkt wird.

2. Transportwagen nach Anspruch 1, dadurch **gekennzeichnet,** daß der obere Korb (13) in Schieberichtung des Transportwagens (1) sich verjüngend gestaltet ist.

3. Transportwagen nach Anspruch 1 oder 2, dadurch **gekennzeichnet,** daß der obere Korb (13) breiter ist als der untere Korb (9).

4. Transportwagen nach einem der Ansprüche 1 bis 3, dadurch **gekennzeichnet,** daß die Rückwand (15) des oberen Korbes (13) in dessen nach oben geschwenkter Lage hinter der hinteren Wand (10) des unteren Korbes (9) angeordnet ist und diese (10) überragt.

5. Transportwagen nach einem der Ansprüche 1 bis 4, dadurch **gekennzeichnet,** daß in gestapeltem Zustand mehrerer Transportwagen (1) und in horizontaler Lage der oberen Körbe (13) diese ineinandergeschoben und die unteren Körbe (9) nebeneinander angeordnet sind.

## Claims

1. A hand-operated trolley (1), having a lower loading surface (3) and having upwardly directed uprights (5) which bear a pushing arrangement (6), having a lower basket (9) fixedly arranged below the pushing arrangement (6), having an upper basket (13) which is arranged at a higher level than the lower basket (9), is offset forwards and is pivotable upwards about a horizontal axis (14) - extending transversely to the pushing arrangement (6) of the trolley (1) - such that it is located above the lower basket (13) in order to form a common receptacle therewith, characterised in that the upper basket (13) is provided with a rear wall (15) which is pivotable into the basket interior about a horizontal axis (16) and which, when the upper basket (13) is pivoted up, is pivoted upwards through impact against the lower basket (9) or against at least one stop located exterior to the basket (9).

2. A trolley in accordance with Claim 1, characterised in that the upper basket (13) tapers in the advancing direction of the trolley (1).

3. A trolley in accordance with Claim 1 or 2, characterised in that the upper basket (13) is wider than the lower basket (9).

4. A trolley in accordance with any one of Claims 1 to 3, characterised in that when the upper basket (13) is in its upwards-pivoted position, the rear wall (15) thereof is arranged behind the rear wall (10) of the lower basket (9) and projects thereabove.

5. A trolley in accordance with any one of Claims 1 to 4, characterised in that when a plurality of trolleys (1) are stacked and when the upper baskets (13) are in the horizontal position, the latter are pushed into one another and the lower baskets (9) are arranged beside one another.

## Revendications

1. Chariot de transport (1) déplaçable à la main, avec une surface de chargement inférieure (3) et avec des montants (5) dirigés vers le haut, qui portent un dispositif de poussée (6), avec un panier inférieur (9) fixement disposé en dessous du dispositif de poussée (6), avec un panier supérieur (13), qui est disposé plus haut que le panier inférieur (9), est décalé vers l'avant et peut pivoter vers le haut, autour d'un axe horizontal (14) s'étendant transversalement à la direction de poussée du chariot de transport (1), de telle sorte qu'il se trouve au-dessus du panier inférieur (9) pour former avec ce dernier un récipient commun, **caractérisé** en ce que le panier supérieur (13) est pourvu d'une cloison arrière (15), qui peut pivoter autour d'un axe horizontal (16) à l'intérieur du panier et qui, lorsque le panier supérieur (13) est pivoté vers le haut, est pivotée vers le haut par le fait qu'elle vient buter contre le panier inférieur (9) ou contre au moins une butée se trouvant en dehors du panier (9).

2. Chariot de transport selon la revendication 1, **caractérisé** en ce que le panier supérieur (13) se rétrécit dans la direction de poussée du chariot de transport (1).

3. Chariot de transport selon la revendication 1 ou 2, **caractérisé** en ce que le panier supérieur (13) est plus large que le panier inférieur (9).

4. Chariot de transport selon une des revendications 1 à 3, **caractérisé** en ce que la cloison arrière (15) du panier supérieur (13) est, dans sa position pivotée vers le haut, disposée derrière la cloison arrière (10) du panier inférieur (9) et dépasse au-dessus de cette cloison (10).

5. Chariot de transport selon une des revendications 1 à 4, **caractérisé** en ce que, à l'état emboîté de plusieurs chariots de transport (1), avec les paniers supérieurs (13) en position horizontale, ces derniers sont disposés en emboîtement et les paniers inférieurs (9) en juxtaposition.
